# EUROPÄISCHE PATENTANMELDUNG

(11) **EP 4 711 767 A1**
(43) Veröffentlichungstag der Anmeldung: **18.03.2026**
(21) Anmeldenummer: 25201560.7
(22) Anmeldetag: 11.09.2025
(51) Int. Cl.: G01N 35/00, G01N 35/04

(54) **MATERIALBEREITSTELLUNGSEINHEIT FÜR DIE LABORAUTOMATION SOWIE LABORINSTALLATION**

(30) Priorität: 13.09.2024 DE 202024105275 U; 29.04.2025 DE 102025116508
(71) Anmelder: LabMatic Automation GmbH, 31515 Wunstorf (DE)
(72) Erfinder: Lange, Mario, 31515 Wunstorf (DE)
(74) Vertreter: Werner, André

(57) **Zusammenfassung**

Die Erfindung betrifft eine Materialbereitstellungseinheit für einen verfahrbaren Industrieroboter (1) zur Automation von Laboren im Bereich der Labormedizin sowie eine Laborinstallation, die den verfahrbaren Industrieroboter (1) sowie die am Industrieroboter (1) montierte Materialbereitstellungseinheit aufweist. Die Materialbereitstellungseinheit umfasst einen am Industrieroboter (1) montierbaren Träger (2) sowie eine oder mehrere Probenaufnahmeeinheiten (3), die jeweils einen Probenhalter (6) zur Aufnahme von Probenbehältnissen und eine Probenhalterfassung (5) zur sicheren Fixierung enthalten. Die Materialbereitstellungseinheit ermöglicht in Kombination mit dem verfahrbaren Industrieroboter (1) eine optimierte Probenlogistik durch schnelle Bereitstellung und den Transport von Laborproben, Verkürzung von Verfahrwegen des Industrieroboters (1) und Steigerung der Prozesseffizienz.

## Beschreibung

Die Erfindung betrifft eine Materialbereitstellungseinheit für einen verfahrbaren Industrieroboter zur Automation von Labors im Bereich der Labormedizin sowie eine Laborinstallation, die den verfahrbaren Industrieroboter sowie die am Industrieroboter montierte Materialbereitstellungseinheit aufweist.

Im Rahmen der labormedizinischen Untersuchungen kommen zunehmend Analyse-Vollautomaten zum Einsatz, mittels derer bestimmte labormedizinische Tests vollständig automatisiert durchgeführt werden. Das zu untersuchende Probenmaterial wird in geeigneten Probenbehältnissen, zumeist Probenröhrchen, in die Analyse-Vollautomaten eingebracht, in denen Tests ohne physischen menschlichen Eingriff erfolgen. Die Analyse-Vollautomaten sind üblicherweise für spezielle Laboruntersuchungen konzipiert, zum Beispiel für Blutbildanalysen oder für die Analyse der Immunchemie und der klinischen Chemie. Insofern sind in den Labors für labormedizinische Untersuchungen üblicherweise diverse, auf einen spezifischen Testzweck ausgerichtete Analyseautomaten im Einsatz.

Die vorbereitenden Arbeiten, wie zum Beispiel die Probenpräparation und die Bestückung der Analyse-Vollautomaten, erfolgen regelmäßig durch medizinisches Fachpersonal. Ein Teil dieser Laborarbeiten umfasst Routinetätigkeiten, die ebenfalls automatisierbar sind. Die das Probenmaterial enthaltenden Probenbehältnisse können beispielsweise mittels eines gängigen Industrieroboters, d. h. eines Roboters mit einem Greifarm bzw. Manipulator, automatisiert von einer Übergabestation an die jeweiligen Analyse-Vollautomaten übergeben oder - falls erforderlich - zum Zentrifugieren vorbereitet werden. Ein derart eingerichtetes, mit einem Industrieroboter arbeitendes automatisiertes Labor ist beispielsweise in DE 10 2021 114 970 A1 beschrieben.

Wenn der Greifarm bzw. Manipulator nicht von einem fixen Punkt aus die Übergabestation und/oder alle Analyseautomaten erreichen kann, können verfahrende bzw. verfahrbare Industrieroboter eingesetzt werden. Um die Analyseaufgaben zu erfüllen, muss der Industrieroboter zum Probentransfer zwischen der Übergabestation und den Analyseautomaten verfahren. Eine große Vielzahl zu prüfender Proben führt zu einem häufigen Verfahren und damit zu langen Verfahrwegen. Vor diesem Hintergrund gilt der Optimierung der Materialflüsse innerhalb medizinischer Labors ein besonderes Augenmerk. Die Bereitstellungswege für das Probenmaterial und die Notwendigkeit, verschiedene Analyseautomaten mit hoher Geschwindigkeit zu bedienen, stellen zentrale Problemstellungen dar.

Aufgabe der Erfindung ist es, die Automatisierung von Laborprozessen durch eine effiziente Bereitstellung und den Transport von Laborproben zu optimieren. Insbesondere soll eine Lösung bereitgestellt werden, die die Verfahrwege eines verfahrbaren Industrieroboters minimiert, die Handhabung von Probenbehältnissen verbessert und die Effizienz der automatisierten Laboranalysen steigert.

Diese Aufgabe wird durch eine Materialbereitstellungseinheit mit den Merkmalen nach Anspruch 1 sowie eine Laborinstallation nach Anspruch 13 gelöst. Zweckmäßige Weiterbildungen der Erfindung sind in den Ansprüchen 2 bis 12 aufgeführt.

Die vorgeschlagene Materialbereitstellungseinheit ist für einen verfahrbaren Industrieroboter vorgesehen, der im Rahmen der Laborautomation eines medizinischen Labors zur Anwendung kommt. Der Industrieroboter ist vorzugsweise ein sogenannter Pick-and-Place Roboter zur robotergestützten Handhabung von Laborproben und zur Anlagenbedienung, d. h., um insbesondere den Transfer und das Platzieren von Laborproben innerhalb der Laboranlage gesteuert durchzuführen und Bedienelemente der Geräte der Laboranlage zu bedienen. Der Industrieroboter weist typischerweise einen Manipulator in Form eines Roboterarms, eine Steuerung sowie einen Endeffektor in Form eines Greifwerkzeuges auf.

Nach Maßgabe der Erfindung umfasst die Materialbereitstellungseinheit einen Träger, der am Industrieroboter montierbar ist, sowie eine oder mehrere vom Träger getragene Probenaufnahmeeinheiten. Jede der Probenaufnahmeeinheiten weist einen Probenhalter zur Aufnahme von Probenbehältnissen auf und ist mit einer Probenhalterfassung ausgestattet, die zur Halterung des Probenhalters dient.

Die Probenaufnahmeeinheiten sind speziell zur Aufnahme und Lagerung von Probenbehältnissen konzipiert; im jeweiligen Probenhalter können die Probenbehältnisse sicher aufgenommen und transportiert werden. Die Probenhalterfassung fixiert den Probenhalter und stellt dessen präzise Positionierung sicher.

Der Probenhalter ist so in die Probenhalterfassung eingesetzt, dass er bei Bedarf aus dieser entnehmbar und wieder in die Probenhalterfassung einsetzbar ist. Die Materialbereitstellungseinheit ermöglicht somit eine optimierte Handhabung von Probenbehältnissen, indem sie deren Aufnahme, Halterung und gezielte Entnahme durch den Industrieroboter sicherstellt.

Durch die Möglichkeit der direkten Montage am verfahrbaren Industrieroboter, d. h. durch die mit dem verfahrbaren Industrieroboter mitfahrende Materialbereitstellungseinheit, werden eine effiziente Bereitstellung und der Transport von Probenbehältnissen im Rahmen der automatisierten Laboranalyse ermöglicht. Es können Fahrbewegungen des Industrieroboters reduziert und unnötige Leerfahrten vermieden werden. Durch optimierte Verfahrwege ergeben sich verkürzte Analysezeiten.

Ein weiterer Vorteil liegt in der modularen Bauweise der Probenaufnahmeeinheiten und der flexiblen Handhabung der Probenhalter. Da diese aus der Probenhalterfassung entnehmbar und wieder einsetzbar sind, können Probenbehältnisse automatisiert und präzise vom Industrieroboter gehandhabt werden - mit oder ohne den Probenhalter. Dies steigert den Probendurchsatz und verbessert die Prozesssicherheit.

Die Nutzung der Materialbereitstellungseinheit bietet mithin eine höhere Effizienz, eine bessere Ressourcennutzung und eine optimierte Laborlogistik für die Probenanalyse in automatisierten Laboren.

Die mitfahrende Materialbereitstellungseinheit ermöglicht es, dass viele Probenbehältnisse auf einmal zu den Analysegeräten transportiert werden können.

Die erfindungsgemäße Laborinstallation für automatisierte Labors umfasst die vorgeschlagene Materialbereitstellungseinheit sowie einen verfahrbaren Industrieroboter zur Handhabung von Laborproben. Der verfahrbare Industrieroboter ist dazu ausgebildet, innerhalb der Laborinstallation die Laborproben zu transportieren und zu den jeweiligen Analysegeräten zu befördern. Die an dem Industrieroboter montierte Materialbereitstellungseinheit dient dabei zur Aufnahme und Bereitstellung der Probenbehältnisse und ermöglicht eine optimierte Handhabung sowie einen effizienten Probentransfer innerhalb des Labors. Durch die Kombination des verfahrbaren Industrieroboters mit der mitfahrenden Materialbereitstellungseinheit wird eine automatisierte und präzise Laborautomation gewährleistet, die den Probendurchsatz erhöht, die Verfahrwege reduziert, Taktzeiten verkürzt und die Effizienz des Laborbetriebs verbessert. Zudem trägt die optimierte Bewegungsführung zu einem geringeren Verschleiß der Roboterachsen bei, da unnötige mechanische Belastungen reduziert werden, wodurch die Lebensdauer des Systems verlängert und der Wartungsaufwand verringert wird.

Die Probenhalter sind vorzugsweise so gestaltet, dass sie direkt in einen Analyse-Vollautomaten eingesetzt werden können. Dies ermöglicht es dem Industrieroboter, die mit Laborproben bestückten Probenhalter direkt in den Analyse-Vollautomaten einzuschleusen. Da ein automatisiertes medizinisches Labor zumeist verschiedene Analyse-Vollautomaten beinhaltet, umfasst die Materialbereitstellungseinheit daher vorzugsweise mehrere Probenaufnahmeeinheiten mit verschiedenen Probenhaltern. Die Anzahl und Art der Probenaufnahmeeinheiten können an den Durchsatz und die Ausstattung des jeweiligen Labors angepasst werden.

Der Probenhalter kann zum Beispiel als sogenannter Tray ausgebildet sein. Das Tray besitzt eine block- oder plattenförmige Grundstruktur mit darin eingebrachten Aussparungen, in die jeweils ein Probenbehältnis (z. B. ein Probenröhrchen zur Aufnahme von Probenblut) formschlüssig einsetzbar ist. Das Tray ist ähnlich einer Lochplatte aufgebaut. Die Aussparungen sind üblicherweise matrixartig in mehreren Reihen angeordnet.

Der Probenhalter kann ferner als sogenanntes Rack ausgebildet sein. Das Rack ist ein blockartiges Aufnahmegestell für Probenbehältnisse, in dem mehrere Probenbehältnisse in einer Reihe angeordnet aufgenommen werden können.

Der Probenhalter kann ferner mehrere Racks umfassen, die gemeinsam in einer Einheit zusammengefasst sind, zum Beispiel in einem Trägerkorb. Der Probenhalter umfasst hierbei dann den Trägerkorb und die darin platzierten Racks.

Die Begriffe Rack und Tray werden in dieser Beschreibung in ihrer englischen Form verwendet, da sie in der Laborbranche üblich sind und eine eindeutige Bezeichnung der jeweiligen Probenhalter ermöglichen.

Die Probenhalterfassung ist regelmäßig geometrisch an den Probenhalter angepasst. Dies bedeutet, dass der Probenhalter vorzugsweise so gestaltet ist, dass er formschlüssig in die Probenhalterfassung eingesetzt werden kann. Hierdurch wird sichergestellt, dass der Probenhalter in einer definierten Position innerhalb der Probenhalterfassung gehalten wird, wodurch eine präzise Platzierung gewährleistet ist. Dies ermöglicht eine sichere und stabile Aufnahme sowie eine exakte Führung des Probenhalters während des automatisierten Handhabungsprozesses durch den Industrieroboter. Die formschlüssige Einsetzbarkeit des Probenhalters in die Probenhalterfassung trägt dazu bei, Fehlpositionierungen zu vermeiden und eine zuverlässige Entnahme sowie das Wiedereinsetzen des Probenhalters zu ermöglichen.

Gemäß einer Ausgestaltung der Probenaufnahmeeinheiten umfasst diese eine Auflage, die zumeist plattenförmig, zum Beispiel als Auflageplatte, ausgebildet ist, wobei die Auflage die Oberfläche bildet, auf der sich die Probenhalterfassung befindet, die zur exakten Positionierung und sicheren Halterung des Probenhalters auf der Auflage dient. Die Auflage ist üblicherweise horizontal ausgerichtet, wobei die Oberfläche, auf der die Probenhalterfassung ausgebildet ist, an der oberen Seite der Auflage liegt. Die Auflage und die Probenhalterfassung können eine gemeinsame Einheit bilden.

Die Probenhalterfassung kann mehrere Führungselemente aufweisen, die umzäunend um den eingesetzten Probenhalter angeordnet sind. Durch diese Anordnung wird gewährleistet, dass der Probenhalter in einer stabilen und definierten Position verbleibt, sodass eine präzise Aufnahme und Entnahme durch den Industrieroboter möglich ist.

Die Führungselemente können insbesondere als Führungskeile ausgebildet sein. Die Führungskeile sind hierbei so ausgerichtet, dass sich die in Ebenen parallel zur Auflage zwischen den Führungskeilen innerhalb der Probenhalterfassung liegenden Flächen zur Auflage hin verkleinern. D. h., bei üblicher Ausführung öffnet sich die Probenhalterfassung nach oben, sodass der Probenhalter beim Einsetzen von oben mittels der Führungskeile in die engste Position innerhalb der Probenhalterfassung geführt und in dieser Position auf der Auflage fixiert wird. Durch diese spezifische Anordnung der Führungskeile wird gewährleistet, dass der Probenhalter beim Einsetzen in die Probenhalterfassung präzise geführt und in einer definierten Position gehalten wird.

Die vorstehend beschriebenen Ausführungen der Probenaufnahmeeinheit mit umzäunender Probenhalterfassung können zum Beispiel mit als Tray ausgeführtem Probenhalter realisiert sein. Diese Ausführung der Probenaufnahmeeinheit wird vorliegend als Tray-Aufnahmeeinheit bezeichnet. Bilden Racks in einem Trägerkorb den jeweiligen Probenhalter, wird die Probenaufnahmeeinheit vorliegend als Rack-Korb-Aufnahmeeinheit bezeichnet.

Gemäß einer anderen Ausführung der Probenaufnahmeeinheiten ist die jeweilige Probenaufnahmeeinheit so ausgebildet, dass der Probenhalter und die Probenhalterfassung einen Schiebesitz zur Halterung des Probenhalters in der Probenhalterfassung aufweisen. Die Probenhalterfassung weist hierzu mindestens ein Führungselement in Form einer Führungsschiene auf, entlang derer der an die Führungsschiene angepasste und durch die Führungsschiene geführte Probenhalter in die Probenhalterfassung einschiebbar ist. Die Schiebesitz-Ausführung der Probenaufnahmeeinheit eignet sich insbesondere für als Racks ausgebildete Probenhalter, die in die Probenhalterfassung eingeschoben werden. Diese Ausführung der Probenaufnahmeeinheit wird vorliegend auch als Rack-Garage bezeichnet.

Es kann ferner vorgesehen sein, dass die Auflage und/oder die Probenhalterfassung einerseits und der Probenhalter andererseits mit einem oder mehreren Fixierelementen versehen sind, die eine lösbare Fixierung des Probenhalters an der Auflage und/oder innerhalb der Probenhalterfassung ermöglichen.

Die Fixierelemente können mechanisch wirken, beispielsweise in Form von Klemmelementen zur Ausbildung einer Klemmverbindung oder Klemmhalterung. Geeignete Ausführungen sind etwa Kugeldruckstücke oder Klemmarme, die den in die Probenhalterfassung eingesetzten Probenhalter sicher, aber lösbar fixieren. Alternativ können die Fixierelemente als Haltemagnete einer magnetischen Halterung ausgeführt sein. In diesem Fall sind die Auflage und/oder die Probenhalterfassung sowie der Probenhalter mit entsprechenden Magneten ausgestattet, die durch ihre Anziehungskraft eine lösbare Fixierung bewirken. Die magnetische Halterung kann sowohl durch die Auswahl geeigneter magnetischer Werkstoffe als auch durch das Anbringen sich anziehender Magnete an Probenhalter und Auflage bzw. Probenhalterfassung realisiert werden.

Vorzugsweise weist der Probenhalter jeweils ein Endeffektor-Greifelement auf, das für das Greifen mittels eines Endeffektors des Industrieroboters ausgelegt ist. Durch die Anbringung des Endeffektor-Greifelements am Probenhalter wird sichergestellt, dass der Industrieroboter den Probenhalter gezielt greifen, anheben, transportieren und wieder in die Probenhalterfassung einsetzen kann. Das Endeffektor-Greifelement ist so gestaltet, dass es eine sichere und stabile Verbindung zwischen dem Probenhalter und dem Endeffektor ermöglicht, wodurch eine präzise Handhabung innerhalb der Materialbereitstellungseinheit gewährleistet wird. Das Endeffektor-Greifelement kann zum Beispiel eine auf den Endeffektor abgestimmte Form aufweisen, die einfach und sicher durch diesen gegriffen werden kann. Das Endeffektor-Greifelement kann aber beispielsweise auch der Transportgriff des vorstehend beschriebenen Trägerkorbs sein.

Die Probenaufnahmeeinheit kann ferner einen oder mehrere Präsenzsensoren umfassen, mittels derer das Vorhandensein bzw. Nichtvorhandensein des Probenhalters in der Probenhalterfassung detektierbar ist. Der Präsenzsensor kann zudem so eingerichtet sein, dass er die korrekte Position und Lage des Probenhalters prüft bzw. überwacht. Dadurch wird sichergestellt, dass der Probenhalter ordnungsgemäß eingesetzt ist und ein zuverlässiger Transport sowie eine sichere Weiterverarbeitung gewährleistet werden. Fehlerhafte Positionierungen, die zu Blockaden, Fehlmessungen oder Beschädigungen führen könnten, lassen sich auf diese Weise frühzeitig erkennen und vermeiden.

Der Träger der Materialbereitstellungseinheit ist vorzugsweise als ein aus Konstruktionsprofilelementen aufgebautes Gestell ausgebildet. Die Konstruktionsprofilelemente bilden die tragende Struktur des Trägers und sorgen für eine stabile und modulare Konstruktion der Materialbereitstellungseinheit. Durch die Verwendung von Konstruktionsprofilelementen wird eine hohe Strukturfestigkeit gewährleistet, während gleichzeitig eine flexible Anpassung der Materialbereitstellungseinheit an unterschiedliche Anforderungen der Laborautomation ermöglicht wird. Diese Gestellausführung des Trägers ermöglicht zudem eine stabile Befestigung der Materialbereitstellungseinheit am Industrieroboter.

Als Konstruktionsprofilelemente haben sich insbesondere T-Nut-Profile bewährt. In Kombination mit als T-Nut-Profilen ausgebildeten Konstruktionsprofilelementen kann der Träger zusätzlich Schrauben sowie in die T-Nut einsetzbare Nutensteine aufweisen, um entlang der Konstruktionsprofilelemente längsschiebliche Schraubverbindungen realisieren zu können. Die Nutensteine, die die Muttern zu den Schrauben bilden, sind in den T-Nuten längsverschieblich und verankern die Schrauben am Konstruktionsprofilelement. An dem derart ausgeführten Träger kann der Industrieroboter, vorzugsweise mit seinem Robotersockel, an passender, veränderbarer Position am Träger bzw. an den Konstruktionsprofilelementen fixiert werden.

Am Träger können auch weitere, vorzugsweise plattenförmige Auflagen als Ablagemöglichkeit, zur Abdeckung oder zum Aufbau weiterer Komponenten angebracht sein. Die Auflagen können, wie bereits beschrieben, gleichzeitig auch Teil der Probenaufnahmeeinheit sein.

Neben den vorstehend beschriebenen Probenaufnahmeeinheiten kann die Materialbereitstellungseinheit auch Probenaufnahmeeinheiten umfassen, die lediglich einen Probenhalter umfassen, der zum Beispiel in Form einer Lochplatte, in die Probenbehältnisse eingesetzt werden können, aufgebaut ist. Der Probenhalter ist hierbei regelmäßig am Träger der Materialbereitstellungseinheit fixiert.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind; dazu zeigen:
- Fig. 1:: eine Ausführung der am Industrieroboter angebrachten Materialbereitstellungseinheit in perspektivischer Ansicht,
- Fig. 2:: den Aufbau des Trägers der Materialbereitstellungseinheit gemäß der Ausführung nach Fig. 1 in perspektivischer Ansicht,
- Fig. 3:: eine als Tray-Aufnahmeeinheit ausgeführte Probenaufnahmeeinheit in perspektivischer Ansicht,
- Fig. 4:: die Probenhalterfassung und die Auflage der Ausführung der Probenaufnahmeeinheit gemäß Fig. 3 in perspektivischer Ansicht,
- Fig. 5:: eine als Rack-Korb-Aufnahmeeinheit ausgeführte Probenaufnahmeeinheit in perspektivischer Ansicht,
- Fig. 6:: die Probenhalterfassung und die Auflage der Ausführung der Probenaufnahmeeinheit gemäß Fig. 5 in perspektivischer Ansicht,
- Fig. 7:: den Trägerkorb der Probenhalterfassung der Ausführung der Probenaufnahmeeinheit gemäß Fig. 5 in perspektivischer Ansicht,
- Fig. 8:: eine als Rack-Garage ausgeführte Probenaufnahmeeinheit in perspektivischer Ansicht,
- Fig. 9:: die Probenhalterfassung und die Auflage der Ausführung der Probenaufnahmeeinheit gemäß Fig. 8 in perspektivischer Ansicht, und
- Fig. 10:: die Probenhalterfassung und die Auflage der Ausführung der Probenaufnahmeeinheit gemäß Fig. 8 und Fig. 9 in der Draufsicht.

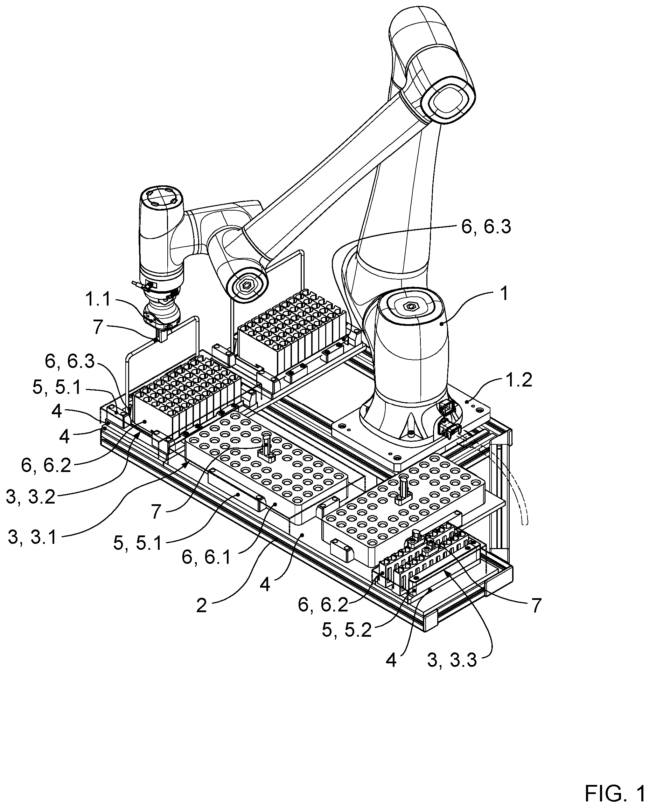

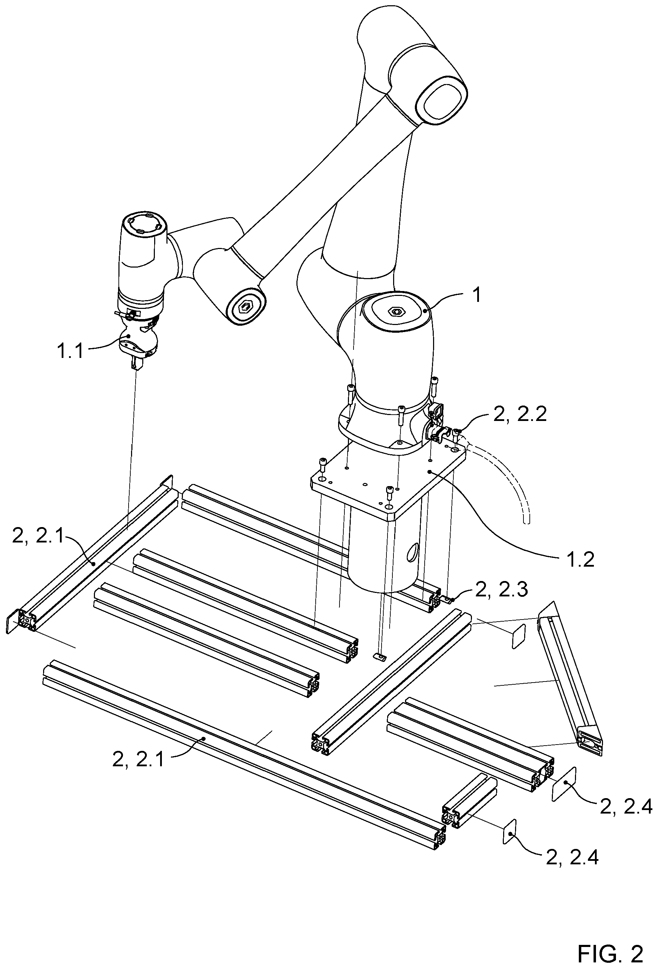

Fig. 1 zeigt eine Ausführung der Materialbereitstellungseinheit, die an dem als 7-Achs-Roboter ausgeführten Industrieroboter 1 angebracht ist. Der Industrieroboter 1 ist mit seinem Robotersockel 1.2 am Träger 2 der Materialbereitstellungseinheit befestigt. Einzelheiten des Aufbaus des Trägers 2 sind in Fig. 1 aus Gründen der Übersichtlichkeit nicht dargestellt; diese gehen aus Fig. 2 hervor. Der Endeffektor 1.1 des Industrieroboters 1 ist als Greifhand ausgebildet.

Die Materialbereitstellungseinheit gemäß Fig. 1 umfasst insgesamt fünf Probenaufnahmeeinheiten 3, nämlich zwei Tray-Aufnahmeeinheiten 3.1, zwei Rack-Korb-Aufnahmeeinheiten 3.2 und eine Rack-Garage 3.3. Für jede der drei Varianten der Probenaufnahmeeinheit 3 ist der Bereich, in dem sich die jeweilige Probenaufnahmeeinheit 3 befindet, mittels gestrichelter Linien veranschaulicht.

Die Basis der jeweiligen Tray-Aufnahmeeinheit 3.1 ist eine der plattenförmigen Auflagen 4, auf der der als Tray 6.1 ausgebildete Probenhalter 6 aufsitzt. Im Tray 6.1 können mehrere (nicht dargestellte) Probenbehältnisse, insbesondere Probenröhrchen, eingesetzt werden. Die Probenbehältnisse sind mittels des Industrieroboters 1 einzeln aus dem Tray 6.1 entnehmbar oder in dieses einsetzbar. Alternativ kann das Tray 6.1 mit allen darin befindlichen Probenbehältnissen entnommen und wieder eingesetzt werden. Hierzu ist am Tray 6.1 das Endeffektor-Greifelement 7 angebracht, mit dem das Tray 6.1 von der Auflage 4 unter Zuhilfenahme des Industrieroboters 1 abgenommen werden kann. Die umzäunend bzw. umfänglich um den Probenhalter 6 bzw. das Tray 6.1 angeordneten Führungskeile 5.1 bilden die Probenhalterfassung 5 für den Probenhalter 6 bzw. das Tray 6.1. Die Führungskeile 5.1 führen den abgenommenen Probenhalter 6 beim Absetzen auf die Auflage 4 bzw. beim Einsetzen in die Probenhalterfassung 5. Hierdurch wird der Probenhalter 6 stets in der vorgesehenen Lage auf der Auflage 4 abgesetzt.

Die Rack-Korb-Aufnahmeeinheiten 3.2 besitzen ebenfalls eine Probenhalterfassung 5, bestehend aus mehreren, umzäunend bzw. umfänglich um den Probenhalter 6 auf einer der Auflagen 4 angeordneten Führungskeilen 5.1, die zur exakten Positionierung des entnehmbaren Probenhalters 6 dient. Der Probenhalter 6 der Rack-Korb-Aufnahmeeinheiten 3.2 umfasst mehrere Racks 6.2, in die jeweils fünf Probenbehältnisse einsetzbar sind, sowie einen Trägerkorb 6.3, der - wie in Fig. 1 ersichtlich - ein Paket aus zehn Racks 6.2 trägt. Das Endeffektor-Greifelement 7 wird durch den Transportgriff des Trägerkorbs 6.3 gebildet. Der Probenhalter 6, d. h. das gesamte Rack-Paket im Trägerkorb 6.3, kann mittels des Industrieroboters 1 von der Auflage 4 entnommen oder auf dieser zielgenau innerhalb der Probenhalterfassung 5 abgesetzt werden.

Die Rack-Garage 3.3 ist dazu ausgebildet, dass die Racks 6.2, die jeweils acht Probenbehältnisse aufnehmen können, in die Probenhalterfassung 5 eingeschoben werden können. Hierzu besitzt die Probenhalterfassung 5 die auf einer der Auflagen 4 angebrachten Führungsschienen 5.2, die die exakte Führung der Racks 6.2 gewährleisten. Am jeweiligen in der Rack-Garage 3.3 befindlichen Rack 6.2 ist ein Endeffektor-Greifelement 7 angebracht, welches das Greifen mittels des Industrieroboters 1 sowie das Ein- bzw. Ausschieben des jeweiligen Racks 6.2 in die bzw. aus der Probenhalterfassung 5 ermöglicht.

Fig. 2 zeigt den Aufbau des Trägers 2 der Materialbereitstellungseinheit in einer perspektivischen Ansicht. Die tragende Hauptstruktur des als Gestell ausgebildeten Trägers 2 bilden die Konstruktionsprofilelemente 2.1 (hier T-Nut-Profile). Der Industrieroboter 1 ist mit seinem Robotersockel 1.2 mittels der Schrauben 2.2 (Zylinderschrauben) und in den T-Nuten der Konstruktionsprofilelemente 2.1 eingesetzten Nutensteinen 2.3 am Träger 2 verschraubt. Endseitig sind an den Konstruktionsprofilelementen 2.1 Abdeckkappen 2.4 angebracht, die die T-Nuten schließen.

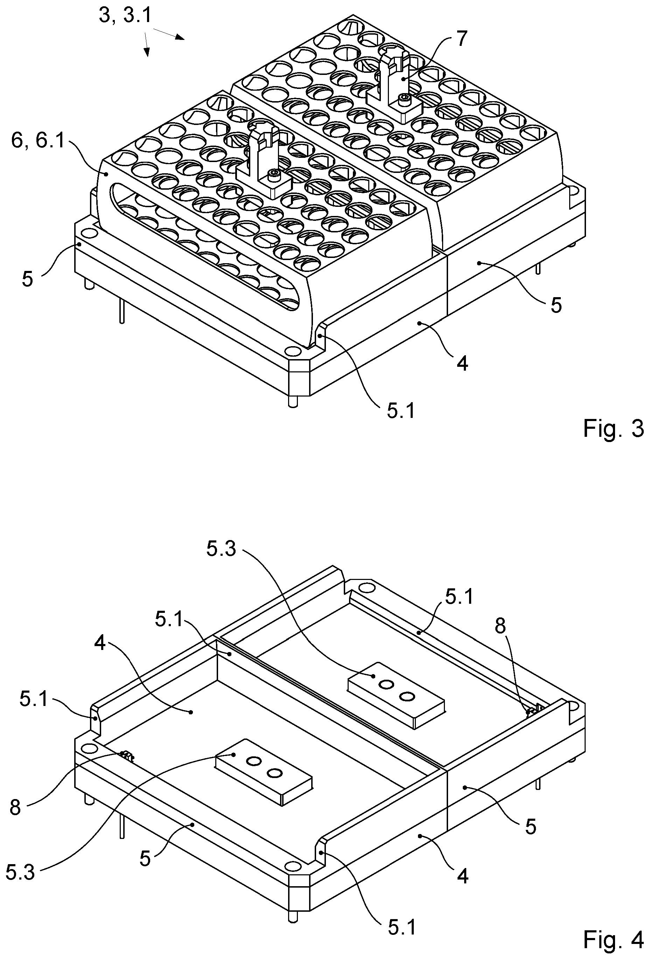

Fig. 3 und Fig. 4 veranschaulichen den Aufbau bzw. die Komponenten einer weiteren Variante einer als Tray-Aufnahmeeinheit 3.1 ausgeführten Probenaufnahmeeinheit 3, wobei in Fig. 3 und Fig. 4 zwei aneinandergrenzende, spiegelsymmetrisch angeordnete Probenaufnahmeeinheiten 3 gezeigt sind. Basis der in Fig. 3 dargestellten, als Tray-Aufnahmeeinheit 3.1 ausgebildeten Probenaufnahmeeinheit 3 ist - ähnlich wie bei der in Fig. 1 dargestellten Tray-Aufnahmeeinheit 3.1 - die plattenförmige Auflage 4, die in der Ausführung gemäß Fig. 3 mit der Probenhalterfassung 5 eine bauliche Einheit bildet, die direkt auf dem Träger 2 der Materialbereitstellungseinheit oder auf einer weiteren am Träger 2 angebrachten (nicht in Fig. 3 und Fig. 4 gezeigten) Auflage 4 installierbar ist. Auf der in Fig. 3 und Fig. 4 gezeigten Auflage 4 sitzt der als Tray 6.1 ausgebildete Probenhalter 6. Im Tray 6.1 können mehrere (nicht dargestellte) Probenbehältnisse, insbesondere Probenröhrchen, eingesetzt werden. Das am Probenhalter 6 angebrachte Endeffektor-Greifelement 7 dient zum Herausheben und Handhabung des Probenhalters 6 mittels des Industrieroboters 1. Die jeweilige Probenhalterfassung 5 ist teilumzäunend ausgeführt, wobei mehrere Seiten der Umzäunung als Führungskeile 5.1 ausgebildet sind. Zentral auf der Auflage 4 ist das Fixierelement 5.3, hier ein Haltemagnet, als magnetische Halterung des Probenhalters 6 angebracht. Über den Präsenzsensor 8 wird erfasst, ob sich der Probenhalter 6 innerhalb der Probenhalterfassung 5 befindet und ob dieser korrekt positioniert ist.

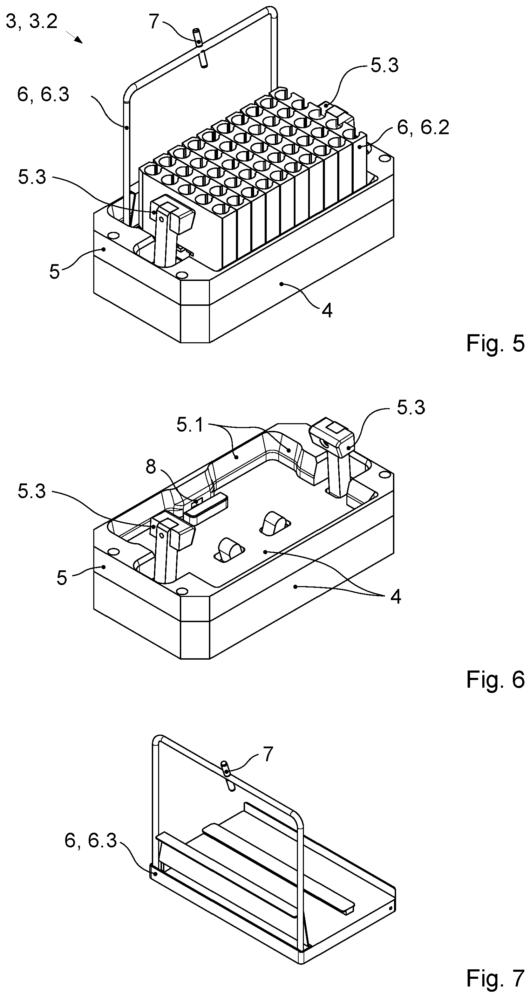

Fig. 5, Fig. 6 und Fig. 7 illustrieren den Aufbau bzw. die Komponenten einer weiteren Variante einer als Rack-Korb-Aufnahmeeinheit 3.2 ausgeführten Probenaufnahmeeinheit 3. Basis der in Fig. 5 dargestellten, als Rack-Korb-Aufnahmeeinheit 3.2 ausgebildeten Probenaufnahmeeinheit 3 ist - ähnlich wie bei der in Fig. 1 dargestellten Rack-Korb-Aufnahmeeinheit 3.2 - die plattenförmige Auflage 4, die in der Ausführung gemäß Fig. 5 mit der Probenhalterfassung 5 eine bauliche Einheit bildet, die direkt auf dem Träger 2 der Materialbereitstellungseinheit oder auf einer weiteren am Träger 2 angebrachten (nicht in Fig. 5 und Fig. 6 gezeigten) Auflage 4 installierbar ist. Die Probenaufnahmeeinheit 3 gemäß Fig. 5 besitzt eine Probenhalterfassung 5 aus einer den Probenhalter 6 umzäunenden Umrandung in Form von Führungskeilen 5.1, die zur exakten Positionierung des entnehmbaren Probenhalters 6 dienen. Innerhalb der Probenhalterfassung 5 - siehe insbesondere Fig. 6 - befinden sich zwei aus der Auflage herausragende, als Klemmarme ausgebildete Fixierelemente 5.3, die gleichzeitig auch zum Zentrieren des Probenhalters 6 dienen. Beim Einsetzen des Probenhalters 6 klappen diese Klemmarme, ausgelöst durch Druckelemente in der Auflage 4, nach innen und fixieren und zentrieren den Probenhalter 6 innerhalb der Probenhalterfassung 5. Der Präsenzsensor 8 erfasst, ob der Probenhalter 6 innerhalb der Probenhalterfassung 5 eingesetzt ist und ob er in dieser korrekt positioniert ist. Der Probenhalter 6 der Rack-Korb-Aufnahmeeinheit 3.2 umfasst zehn Racks 6.2, in die jeweils fünf Probenbehältnisse einsetzbar sind, sowie den Trägerkorb 6.3, der ein Paket aus den zehn Racks 6.2 trägt. Das Endeffektor-Greifelement 7 - siehe Fig. 5 und Fig. 7 - wird durch den Transportgriff des in Fig. 7 separat dargestellten Trägerkorbs 6.3 gebildet. Der Probenhalter 6, d. h. das gesamte Rack-Paket mit dem Trägerkorb 6.3, kann hiermit mittels des Industrieroboters 1 von der Auflage 4 entnommen oder auf dieser zielgenau innerhalb der Probenhalterfassung 5 abgesetzt werden.

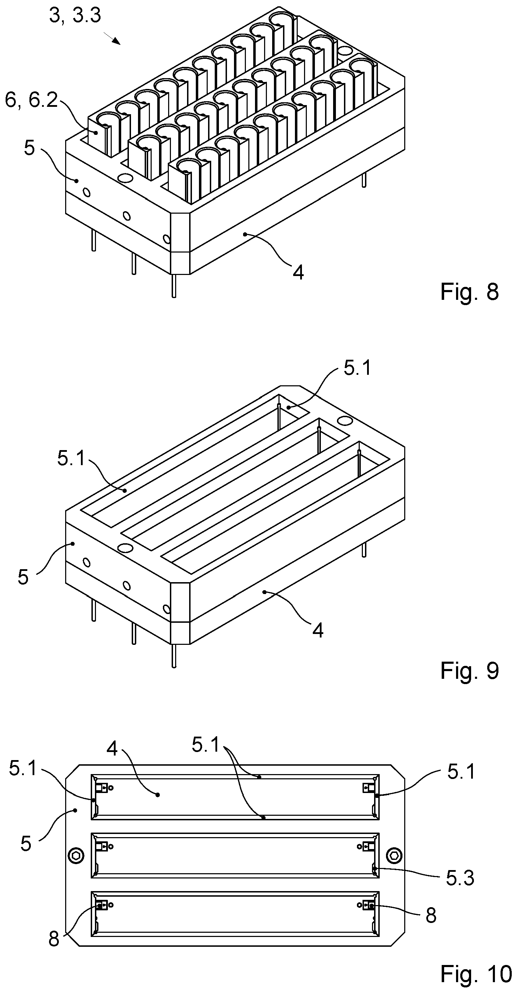

Fig. 8, Fig. 9 und Fig. 10 veranschaulichen den Aufbau bzw. die Komponenten einer weiteren Variante einer als Rack-Garage 3.3 ausgeführten Probenaufnahmeeinheit 3. Basis der in Fig. 8 dargestellten, als Rack-Garage 3.3 ausgebildeten Probenaufnahmeeinheit 3 ist - ähnlich wie bei der in Fig. 1 dargestellten Rack-Garage 3.3 - die plattenförmige Auflage 4, die in der Ausführung gemäß Fig. 8 mit der Probenhalterfassung 5 eine bauliche Einheit bildet, die direkt auf dem Träger 2 der Materialbereitstellungseinheit oder auf einer weiteren am Träger 2 angebrachten (nicht in Fig. 8, Fig. 9 und Fig. 10 gezeigten) Auflage 4 installierbar ist. Diese Ausführung der Probenaufnahmeeinheit 3 umfasst eine Probenhalterfassung 5, in der drei als Rack 6.2 ausgebildete Probenhalter 6 innerhalb jeweils einer von Führungskeilen 5.1 umzäunten Aufnahmeaussparung einsetzbar sind. In der jeweiligen Aufnahmeaussparung - siehe Fig. 10 - befindet sich jeweils ein als Kugeldruckstück ausgebildetes Fixierelement 5.3 zum mechanischen Fixieren des in der jeweiligen Aufnahmeaussparung der Probenhalterfassung 5 sitzenden Racks 6.2. Jedes der Racks 6.2 kann zehn Probenbehältnisse aufnehmen. Der Präsenzsensor 8 erfasst, ob sich das jeweilige Rack 6.2 innerhalb der jeweiligen Aufnahmeaussparung der Probenhalterfassung 5 befindet und ob es in dieser korrekt positioniert ist.

### Bezugszeichenliste

- 1: Industrieroboter
- 1.1: Endeffektor
- 1.2: Robotersockel
- 2: Träger
- 2.1: Konstruktionsprofilelement
- 2.2: Schraube
- 2.3: Nutenstein
- 2.4: Abdeckkappe
- 3: Probenaufnahmeeinheit
- 3.1: Tray-Aufnahmeeinheit
- 3.2: Rack-Korb-Aufnahmeeinheit
- 3.3: Rack-Garage
- 4: Auflage
- 5: Probenhalterfassung
- 5.1: Führungskeil
- 5.2: Führungsschiene
- 5.3: Fixierelement
- 6: Probenhalter
- 6.1: Tray
- 6.2: Rack
- 6.3: Trägerkorb
- 7: Endeffektor-Greifelement
- 8: Präsenzsensor

## Patentansprüche

1. Materialbereitstellungseinheit für einen verfahrbaren Industrieroboter (1) zur Laborautomation, wobei die Materialbereitstellungseinheit einen am Industrieroboter (1) montierbaren Träger (2) sowie eine oder mehrere vom Träger (2) getragene Probenaufnahmeeinheiten (3) umfasst, wobei jede der Probenaufnahmeeinheiten (3) jeweils einen Probenhalter (6) zur Aufnahme von Probenbehältnissen sowie eine Probenhalterfassung (5) zur Halterung des Probenhalters (6) aufweist, wobei der Probenhalter (6) aus der Probenhalterfassung (5) entnehmbar und in die Probenhalterfassung (5) einsetzbar ist.

2. Materialbereitstellungseinheit nach Anspruch 1, **dadurch gekennzeichnet, dass** die Probenhalterfassung (5) dem Probenhalter (6) geometrisch so angepasst ist, dass der Probenhalter (6) in die Probenhalterfassung (5) formschlüssig einsetzbar ist.

3. Materialbereitstellungseinheit nach Anspruch 1 oder 2, **dadurch gekennzeichnet, dass** mindestens eine der Probenaufnahmeeinheiten (3) eine Auflage (4) umfasst, auf deren Oberfläche die Probenhalterfassung (5) ausgebildet ist, wobei die Probenhalterfassung (5) mehrere Führungselemente aufweist, die umzäunend um den eingesetzten Probenhalter (6) angeordnet sind.

4. Materialbereitstellungseinheit nach Anspruch 3, **dadurch gekennzeichnet, dass** die Führungselemente als Führungskeile (5.1) ausgebildet sind, wobei die Führungskeile (5.1) so ausgerichtet sind, dass sich die in Ebenen parallel zur Auflage (4) zwischen den Führungskeilen (5.1) innerhalb der Probenhalterfassung (5) liegenden Flächen zur Auflage (4) hin verkleinern.

5. Materialbereitstellungseinheit nach Anspruch 3 oder 4, **dadurch gekennzeichnet, dass** die Auflage (4) und/oder die Probenhalterfassung (5) einerseits und der Probenhalter (6) andererseits mit einem oder mehreren Fixierelementen (5.3) zur lösbaren Fixierung des Probenhalters (6) an der Auflage (4) und/oder innerhalb der Probenhalterfassung (5) versehen sind.

6. Materialbereitstellungseinheit nach Anspruch 5, **dadurch gekennzeichnet, dass** die Fixierelemente (5.3) Haltemagnete zur Ausbildung einer magnetischen Halterung des Probenhalters (6) an der Auflage (4) und/oder innerhalb der Probenhalterfassung (5) sind.

7. Materialbereitstellungseinheit nach Anspruch 5, **dadurch gekennzeichnet, dass** die Fixierelemente (5.3) Klemmelemente zur Ausbildung einer lösbaren Klemmverbindung des Probenhalters (6) an der Auflage (4) und/oder innerhalb der Probenhalterfassung (5) sind.

8. Materialbereitstellungseinheit nach Anspruch 1 oder 2, **dadurch gekennzeichnet, dass** mindestens eine der Probenaufnahmeeinheiten (3) so ausgebildet ist, dass der Probenhalter (6) und die Probenhalterfassung (5) einen Schiebesitz zur Halterung des Probenhalters (6) in der Probenhalterfassung (5) aufweisen, wobei die Probenhalterfassung (5) mindestens ein Führungselement in Form einer Führungsschiene (5.2) umfasst, entlang derer der an die Führungsschiene (5.2) angepasste und durch die Führungsschiene (5.2) geführte Probenhalter (6) in die Probenhalterfassung (5) einschiebbar ist.

9. Materialbereitstellungseinheit nach einem der Ansprüche 1 bis 8, **dadurch gekennzeichnet, dass** der Probenhalter (6) ein Endeffektor-Greifelement (7) zum Greifen mittels eines Endeffektors (1.1) des Industrieroboters (1) aufweist.

10. Materialbereitstellungseinheit nach einem der Ansprüche 1 bis 9, **dadurch gekennzeichnet, dass** die Probenhalterfassung (5) eines oder mehrerer der Probenaufnahmeeinheiten (3) einen Präsenzsensor (8) zur Detektion der Präsenz des Probenhalters (6) in der Probenhalterfassung (5) aufweist.

11. Materialbereitstellungseinheit nach einem der Ansprüche 1 bis 10, **dadurch gekennzeichnet, dass** der Träger (2) ein aus Konstruktionsprofilelementen (2.1) aufgebautes Gestell ist.

12. Materialbereitstellungseinheit nach Anspruch 11, **dadurch gekennzeichnet, dass** die Konstruktionsprofilelemente (2.1) T-Nut-Profile sind, wobei der Träger (2) ferner Schrauben (2.2) und in die T-Nut der Konstruktionsprofilelemente (2.1) einsetzbare Nutensteine (2.3) zur Ausbildung von entlang der Konstruktionsprofilelemente (2.1) längsschieblichen Schraubverbindungen aufweist.

13. Laborinstallation für automatisierte Labors, aufweisend einen verfahrbaren Industrieroboter (1) zur Handhabung von Laborproben, **dadurch gekennzeichnet, dass** die Laborinstallation ferner eine am Industrieroboter (1) montierte Materialbereitstellungseinheit nach einem der Ansprüche 1 bis 12 aufweist.

## Geänderte Patentansprüche

### Geänderte Patentansprüche gemäss Regel 137(2) EPÜ.

1. Materialbereitstellungseinheit für einen als Roboter mit einem Greifarm ausgebildeten, verfahrbaren Industrieroboter (1) zur Laborautomation, wobei der verfahrbare Industrieroboter (1) ferner dazu ausgebildet ist, in einem Labor zwischen Übergabestationen und/oder Analyseautomaten zu verfahren, die von einem fixen Punkt aus durch den Greifarm nicht erreichbar sind, wobei die Materialbereitstellungseinheit einen am Industrieroboter (1) montierbaren Träger (2) sowie eine oder mehrere vom Träger (2) getragene Probenaufnahmeeinheiten (3) umfasst, wobei die Materialbereitstellungseinheit durch direkte Montage am Industrieroboter (1) als mit dem verfahrbaren Industrieroboter (1) mitfahrende Materialbereitstellungseinheit ausgebildet ist, wobei jede der Probenaufnahmeeinheiten (3) jeweils einen Probenhalter (6) zur Aufnahme von Probenbehältnissen sowie eine Probenhalterfassung (5) zur Halterung des Probenhalters (6) aufweist, wobei der Probenhalter (6) ein Endeffektor-Greifelement (7) zum Greifen des Probenhalters (6) mittels eines Endeffektors (1.1) am Greifarm des Industrieroboters (1) aufweist, und wobei der Probenhalter (6) durch Greifen des Probenhalters (6) am Endeffektor-Greifelement (7) mittels des Endeffektors (1.1) des Industrieroboters (1) aus der Probenhalterfassung (5) entnehmbar und in die Probenhalterfassung (5) einsetzbar ist.

2. Materialbereitstellungseinheit nach Anspruch 1, **dadurch gekennzeichnet, dass** die Probenhalterfassung (5) dem Probenhalter (6) geometrisch so angepasst ist, dass der Probenhalter (6) in die Probenhalterfassung (5) formschlüssig einsetzbar ist.

3. Materialbereitstellungseinheit nach Anspruch 1 oder 2, **dadurch gekennzeichnet, dass** mindestens eine der Probenaufnahmeeinheiten (3) eine Auflage (4) umfasst, auf deren Oberfläche die Probenhalterfassung (5) ausgebildet ist, wobei die Probenhalterfassung (5) mehrere Führungselemente aufweist, die umzäunend um den eingesetzten Probenhalter (6) angeordnet sind.

4. Materialbereitstellungseinheit nach Anspruch 3, **dadurch gekennzeichnet, dass** die Führungselemente als Führungskeile (5.1) ausgebildet sind, wobei die Führungskeile (5.1) so ausgerichtet sind, dass sich die in Ebenen parallel zur Auflage (4) zwischen den Führungskeilen (5.1) innerhalb der Probenhalterfassung (5) liegenden Flächen zur Auflage (4) hin verkleinern.

5. Materialbereitstellungseinheit nach Anspruch 3 oder 4, **dadurch gekennzeichnet, dass** die Auflage (4) und/oder die Probenhalterfassung (5) einerseits und der Probenhalter (6) andererseits mit einem oder mehreren Fixierelementen (5.3) zur lösbaren Fixierung des Probenhalters (6) an der Auflage (4) und/oder innerhalb der Probenhalterfassung (5) versehen sind.

6. Materialbereitstellungseinheit nach Anspruch 5, **dadurch gekennzeichnet, dass** die Fixierelemente (5.3) Haltemagnete zur Ausbildung einer magnetischen Halterung des Probenhalters (6) an der Auflage (4) und/oder innerhalb der Probenhalterfassung (5) sind.

7. Materialbereitstellungseinheit nach Anspruch 5, **dadurch gekennzeichnet, dass** die Fixierelemente (5.3) Klemmelemente zur Ausbildung einer lösbaren Klemmverbindung des Probenhalters (6) an der Auflage (4) und/oder innerhalb der Probenhalterfassung (5) sind.

8. Materialbereitstellungseinheit nach Anspruch 1 oder 2, **dadurch gekennzeichnet, dass** mindestens eine der Probenaufnahmeeinheiten (3) so ausgebildet ist, dass der Probenhalter (6) und die Probenhalterfassung (5) einen Schiebesitz zur Halterung des Probenhalters (6) in der Probenhalterfassung (5) aufweisen, wobei die Probenhalterfassung (5) mindestens ein Führungselement in Form einer Führungsschiene (5.2) umfasst, entlang derer der an die Führungsschiene (5.2) angepasste und durch die Führungsschiene (5.2) geführte Probenhalter (6) in die Probenhalterfassung (5) einschiebbar ist.

9. Materialbereitstellungseinheit nach einem der Ansprüche 1 bis 8, **dadurch gekennzeichnet, dass** die Probenhalterfassung (5) eines oder mehrerer der Probenaufnahmeeinheiten (3) einen Präsenzsensor (8) zur Detektion der Präsenz des Probenhalters (6) in der Probenhalterfassung (5) aufweist.

10. Materialbereitstellungseinheit nach einem der Ansprüche 1 bis 9, **dadurch gekennzeichnet, dass** der Träger (2) ein aus Konstruktionsprofilelementen (2.1) aufgebautes Gestell ist.

11. Materialbereitstellungseinheit nach Anspruch 10, **dadurch gekennzeichnet, dass** die Konstruktionsprofilelemente (2.1) T-Nut-Profile sind, wobei der Träger (2) ferner Schrauben (2.2) und in die T-Nut der Konstruktionsprofilelemente (2.1) einsetzbare Nutensteine (2.3) zur Ausbildung von entlang der Konstruktionsprofilelemente (2.1) längsschieblichen Schraubverbindungen aufweist.

12. Laborinstallation für automatisierte Labors, aufweisend einen als Roboter mit einem Greifarm ausgebildeten, verfahrbaren Industrieroboter (1) zur Handhabung von Laborproben, wobei der verfahrbare Industrieroboter (1) ferner dazu ausgebildet ist, in einem Labor zwischen Übergabestationen und/oder Analyseautomaten zu verfahren, die von einem fixen Punkt aus durch den Greifarm nicht erreichbar sind, **dadurch gekennzeichnet, dass** die Laborinstallation ferner eine am Industrieroboter (1) montierte Materialbereitstellungseinheit nach einem der Ansprüche 1 bis 11 aufweist, wobei der verfahrbare Industrieroboter (1) ausgebildet ist, den Probenhalter (6) der Materialbereitstellungseinheit durch Greifen mittels des Endeffektors (1.1) am Greifarm des Industrieroboters (1) aus der Probenhalterfassung (5) zu entnehmen und in die Probenhalterfassung (5) der Materialbereitstellungseinheit zusetzen.
